# EUROPÄISCHE PATENTSCHRIFT

(11) **EP 3 617 077 B1**
(45) Veröffentlichungstag und Bekanntmachung des Hinweises auf die Patenterteilung: **02.06.2021**
(21) Anmeldenummer: 19189959.0
(22) Anmeldetag: 05.08.2019
(51) Int. Cl.: B65B 9/04, B65B 41/18, B65B 5/04, B65B 41/14

(54) **VERFAHREN ZUM VERPACKEN VON PRODUKTEN UND TIEFZIEHVERPACKUNGSMASCHINE**
METHOD FOR PACKAGING PRODUCTS AND DEEP DRAW PACKAGING MACHINE
PROCÉDÉ D'EMBALLAGE DE PRODUITS ET MACHINE D'EMBOUTISSAGE-ENVELOPPEMENT SOUS PELLICULE

(30) Priorität: 29.08.2018 DE 102018214666
(43) Veröffentlichungstag der Anmeldung: 04.03.2020
(73) Patentinhaber: MULTIVAC Sepp Haggenmüller SE & Co. KG, 87787 Wolfertschwenden (DE)
(72) Erfinder: MÖßNANG, Konrad, 87439 Kempten (DE); HAGGENMÜLLER, Martin, 87439 Kempten (DE)
(74) Vertreter: Grünecker Patent- und Rechtsanwälte PartG mbB

(56) Entgegenhaltungen:
- DE-A1- 2 355 208
- DE-A1- 2 852 697
- DE-B1- 1 815 983

## Beschreibung

Die vorliegende Erfindung betrifft das Verpacken von Produkten in Tiefziehverpackungsmaschinen.

In aus der Praxis bekannten Tiefziehverpackungsmaschinen wird eine Unterfolienbahn mittels einer Fördereinrichtung nacheinander einer Formstation, einer Einlegestrecke, einer Siegelstation und einer Schneidstation zugeführt. In der Formstation werden durch Tiefziehen Verpackungsmulden in der Unterfolienbahn ausgebildet. Die Verpackungsmulden werden in der Einlegestrecke mit zu verpackenden Produkten befüllt. In der Siegelstation werden die befüllten Verpackungsmulden durch Ansiegeln einer Oberfolie verschlossen. Schließlich werden die verschlossenen Verpackungen in der Schneidstation aus dem Folienverbund ausgetrennt. In Tiefziehverpackungsmaschinen können Produkte aller Art verpackt werden. Besonders relevant sind Tiefziehverpackungsmaschinen beispielsweise zum Verpacken von Lebensmittelprodukten oder medizintechnischen Produkten.

Aus der DE 10 2006 045 292 A1 ist eine Verpackungsmaschine zum Verpacken von Gegenständen in Blisterverpackungen bekannt. Um die Montage der Verpackungsmaschine am Aufbauort zu erleichtern, ist die Verpackungsmaschine in einzelne Module aufgeteilt, die jeweils eigene Antriebe für die Unterfolie aufweisen. Ein solches Modul umfasst beispielsweise eine Formstation zum Ausbilden von Näpfen in der Unterfolienbahn. Zudem sind Module mit einer Füllstation zum Zuführen von Produkten, mit einer Siegelstation zum Verschließen der Verpackungen, und mit einer Stanz- und Schneideeinrichtung vorgesehen. Um den Arbeitstakt der einzelnen Module zueinander zu synchronisieren, sind Ausgleichsschlaufen vorgesehen, die für einen konstanten Zug der Unterfolienbahn an bestimmten Positionen sorgen.

In Tiefziehverpackungsmaschinen hergestellte Verpackungen weisen für gewöhnlich einen umlaufenden Flanschbereich auf, welcher unter anderem die Siegelnaht (Verbindung zwischen Verpackungsmulde und Oberfolie) umfasst. Prinzipiell wäre es für manche Anwendungen erstrebenswert, den Flansch möglichst schmal auszubilden. Dies kann jedoch problematisch sein, da Toleranzen bei der Positionierung der Siegelnaht und Toleranzen bei der Schnittführung beim Ausschneiden der verschlossenen Verpackungen aus dem Folienverbund innerhalb des Flanschbereichs liegen müssen.

Aus der EP 2 740 679 A1 ist eine Tiefziehverpackungsmaschine bekannt, bei der in der Formstation nicht nur die Verpackungsmulden ausgebildet werden, sondern auch noch mittels einer Stanzeinrichtung in definierter Position zu den Verpackungsmulden Löcher eingebracht werden. Diese Löcher dienen als Referenzelemente und werden jeweils vor Erreichen der Siegelstation und der Schneidstation mittels eines Messsystems, beispielsweise einer Lichtschranke, detektiert. Die Siegelstation und die Schneidstation sind über eine Verstelleinrichtung entlang der Folientransportrichtung beweglich und werden basierend auf einer detektierten Position der Löcher jeweils taktweise geeignet zu den zu verarbeitenden Verpackungsmulden ausgerichtet. Somit können die Siegelstation und die Schneidstation immer relativ exakt in Bezug auf die Lage der Verpackungsmulden positioniert werden, so dass Vorschubtoleranzen zumindest teilweise ausgeglichen werden und Verpackungen mit relativ schlanken Flanschen herstellbar sind. Nachteilig an diesem System ist, dass die Siegelstation und die Schneidstation verstellbar beweglich ausgebildet sein müssen, um in Bezug auf die Unterfolie ausgerichtet werden zu können. Zudem ist ein separates Messsystem zum Detektieren der Löcher erforderlich.

Aus der DE 18 15 983 A ist eine Vorrichtung zum automatischen Herstellen von Behältern durch Tiefziehen einer mit einem Zerrbild bedruckten Folie bekannt. Die Vorrichtung umfasst eine Trenneinrichtung zum Abtrennen von Zuschnitten von einem zugeführten Folienband. Der Trenneinrichtung ist eine Rastlochstanze zum Einstanzen von Rastlöchern in die Zuschnitte zugeordnet. Transportzangen einer Fördereintichtung zum Fördern der Zuschnitte durch eine Heizeinrichtung, eine Formeinrichtung und weitere Einrichtungen weisen je einen zum Zentrieren der Zuschnitte in die Rastlöcher eingreifenden Zapfen auf.

Es ist Aufgabe der Erfindung, einen Weg zu finden, Verpackungen mit geringer Flanschbreite möglichst ohne großen Aufwand reproduzierbar und zuverlässig in Tiefziehverpackungsmaschinen herzustellen.

Diese Aufgabe wird sowohl durch den Gegenstand von Anspruch 1 als auch durch den Gegenstand von Anspruch 10 gelöst. Die abhängigen Ansprüche geben vorteilhafte Ausführungsformen der Erfindung an.

Die Erfindung betrifft ein Verfahren zum Verpacken von Produkten, wobei beispielsweise Lebensmittelprodukte oder medizintechnische Produkte verpackt werden können. Das Verfahren umfasst das getaktete Fördern einer Unterfolie entlang einer Transportrichtung mittels einer Fördereinrichtung zu einer Formstation, weiter zu einer Einlegestrecke, noch weiter zu einer Siegelstation und abermals weiter zu einer Schneidstation. In der Formstation werden in der Unterfolie durch Tiefziehen Verpackungsmulden geformt. In der Einlegestrecke werden die Verpackungsmulden mit Produkten befüllt. Dies kann beispielsweise manuell oder automatisiert erfolgen. In der Siegelstation werden die befüllten Verpackungsmulden durch siegelndes Verbinden einer Oberfolie mit der Unterfolie verschlossen. Optional kann das Siegeln unter Vakuum- oder Schutzgasatmosphäre erfolgen. Dies ist beispielsweise zweckmäßig, wenn die Haltbarkeit von zu verpackenden Lebensmittelprodukten erhöht werden soll. In der Schneidstation werden die befüllten Verpackungsmulden aus dem Folienverbund ausgeschnitten. Dies kann beispielsweise durch vollständiges Schneiden, insbesondere Ausstanzen, der Unterfolie und der Oberfolie entlang des Verpackungsumrisses erfolgen.

Erfindungsgemäß werden in der Unterfolie in definierter Relativlage zu den Verpackungsmulden Zentrierlöcher ausgebildet. Die Unterfolie wird dann durch Eingriff zumindest eines Zentrierstifts in die Zentrierlöcher ausgerichtet. Hierbei kann die Unterfolie durch den Eingriff des Zentrierstifts in ein korrespondierendes Zentrierloch zum Ausrichten bewegt werden. Die Bewegung der Unterfolie beim Ausrichten kann ein Verschieben der Position der Unterfolie und/oder ein Verändern der Form der Unterfolie durch Ziehen umfassen. Insbesondere kann die Unterfolie durch den Eingriff zwischen Zentrierstift und Zentrierloch entlang der Transportrichtung und/oder entlang einer senkrecht zu der Transportrichtung laufenden Querrichtung ausgebildet werden, also beim Ausrichten eine Bewegung entlang (oder entgegen) der Transportrichtung und/oder quer zur Transportrichtung ausführen. Das Ausrichten kann insbesondere in einer horizontalen Ebene erfolgen.

Durch das Ausrichten der Unterfolie werden Abweichungen und Ungenauigkeiten beim getakteten Fördern der Unterfolie durch die Fördereinrichtung ausgeglichen. Die Vorschubtoleranz beim getakteten Fördern der Unterfolie kann daher bedeutend reduziert werden. Somit kann die Positionierung der in der Unterfolienbahn ausgebildeten Verpackungsmulden in Bezug auf verschiedene Verarbeitungsstationen sehr genau eingestellt werden. Aufgrund der somit erhöhten Verarbeitungsgenauigkeit wird es beispielsweise möglich, Verpackungen mit einem schmaleren Flansch herzustellen, da sich der von dem Flansch abzudeckende Toleranzbereich verringert. Insgesamt wird die Herstellung von Verpackungen genauer und reproduzierbarer.

Das Ausrichten der Unterfolie durch mechanischen Eingriff des Zentrierstiftes in ein korrespondierendes Zentrierloch ist besonders kostengünstig und einfach zu realisieren. Es ist nicht erforderlich, eine separate Einrichtung zum Detektieren des Zentrierlochs vorzusehen. Da erfindungsgemäß die Unterfolie und nicht die entsprechende Arbeitsstation ausgerichtet wird, ist es nicht erforderlich, dass die Arbeitsstation einstellbar beweglich ist. Die Arbeitsstationen können beispielsweise einfach ortsfest an einem Maschinenrahmen der Verpackungsmaschine angebracht werden.

Die Unterfolie wird erfindungsgemäß bezüglich der Transportrichtung vor dem zumindest einen Zentrierstift von der Fördereinrichtung freigegeben, so dass die Unterfolie für das Ausrichten durch den Zentrierstift Spiel hat. So kann gewährleistet werden, dass der Zentrierstift die Unterfolie auch ohne Strecken der Unterfolie ausrichten kann. Dies ist insbesondere bei schwer streckbaren Hartfolien wichtig. Auch bei leicht streckbaren Folien ist dies jedoch vorteilhaft, da so ein übermäßiges Strecken der Folie und eine damit einhergehende örtliche Reduktion der Folienstärke zumindest teilweise vermieden werden kann.

Vorzugsweise umfasst der zumindest eine Zentrierstift zumindest einen in der Schneidstation vorgesehenen Zentrierstift. Durch ein Ausrichten der Unterfolie in der Schneidstation kann die Positionierung der Verpackungsmulden direkt vor dem Ausschneiden aus dem Folienverbund erfolgen. Somit wird gewährleistet, dass der Schnitt möglichst genau entlang des gewünschten Verpackungsumrisses erfolgt.

Zum Ausschneiden der befüllten Verpackungsmulden können ein Schneidwerkzeugoberteil und ein Schneidwerkzeugunterteil der Schneidstation eine Relativbewegung aufeinander zu ausführen. Vorzugsweise erfolgt der Eingriff des zumindest einen Zentrierstifts in ein entsprechendes Zentrierloch im Zuge dieser Relativbewegung, so dass die Unterfolie vor dem eigentlichen Ausschneiden in der Schneidstation ausgerichtet wird.

Insbesondere kann der Zentrierstift an dem Schneidwerkzeugoberteil oder dem Schneidwerkzeugunterteil vorgesehen sein. Der Zentrierstift kann dann im Zuge der Relativbewegung zwischen dem Schneidwerkzeugoberteil und dem Schneidwerkzeugunterteil ohne zusätzlich Vorkehrungen, insbesondere ohne eigene Antriebseinrichtung, in das korrespondierende Zentrierloch eingreifen.

Alternativ oder zusätzlich zu einem in der Schneidstation vorgesehenen Zentrierstift kann der zumindest eine Zentrierstift zumindest einen in der Siegelstation vorgesehenen Zentrierstift umfassen. Dieser kann die Unterfolie direkt vor dem Ansiegeln der Oberfolie ausrichten, so dass die Genauigkeit der Positionierung der Siegelnaht in Bezug auf die Verpackungsmulde erhöht wird.

Für das siegelnde Verbinden der Oberfolie mit der Unterfolie können ein Siegelwerkzeugoberteil und ein Siegelwerkzeugunterteil der Siegelstation eine Relativbewegung aufeinander zu ausführen. Vorzugsweise erfolgt der Eingriff des zumindest einen in der Siegelstation vorgesehenen Zentrierstifts in ein korrespondierendes Zentrierloch im Zuge dieser Relativbewegung, so dass die Unterfolie vor dem eigentlichen Siegeln in der Siegelstation ausgerichtet wird.

Insbesondere kann der Zentrierstift an dem Siegelwerkzeugoberteil oder dem Siegelwerkzeugunterteil angebracht sein und bei der Relativbewegung zwischen Siegelwerkzeugoberteil und Siegelwerkzeugunterteil ohne zusätzliche Maßnahmen, insbesondere ohne einen zusätzlichen Antrieb, in Eingriff mit einem korrespondierenden Zentrierloch kommen.

Gemäß einer vorteilhaften Ausführungsform werden die Zentrierlöcher beim Formen der Verpackungsmulden in der Formstation ausgebildet. Dies kann insbesondere durch Ausstanzen der Zentrierlöcher erfolgen. Eine entsprechende Stanzeinrichtung könnte beispielsweise derart in die Formstation integriert sein, dass ein Antrieb der Formstation zum Tiefziehen der Verpackungsmulden für das Ausstanzen mitgenutzt wird. Alternativ wäre es auch denkbar, eine separate Stanzstation zum Ausbilden der Zentrierlöcher vorzusehen. Wenn die Zentrierlöcher in der Formstation ausgebildet werden, lässt sich die definierte Relativlage der Zentrierlöcher zu den Verpackungsmulden besonders einfach und genau erreichen.

Vorzugsweise umfasst die Fördereinrichtung Klammerketten mit Klammerelementen, welche die Unterfolie zum Fördern der Unterfolie bezüglich der Transportrichtung auf beiden lateralen Seiten halten. Die Klammerelemente können die Unterfolie bezüglich der Transportrichtung vor dem zumindest einen Zentrierstift freigeben.

Gemäß einer weiteren Ausführungsform wird die Unterfolie oder der Folienverbund (Unterfolie mit angesiegelter Oberfolie) bezüglich der Transportrichtung vor dem zumindest einen Zentrierstift mittels einer Querschneideinrichtung quer zur Transportrichtung durchgeschnitten, insbesondere komplett durchgeschnitten. Dies erleichtert das Ausrichten entlang der Transportrichtung durch den Zentrierstift, da der auszurichtende Folienbereich unabhängig von dem dahinterliegenden Folienbereich bewegbar wird.

Gemäß einer vorteilhaften Ausführungsform ist die Querschneideinrichtung in die Schneidstation oder die Siegelstation integriert. Das Durchschneiden quer zur Transportrichtung mittels der Querschneideinrichtung erfolgt sinnvollerweise vor dem Ausrichten durch den Zentrierstift. Die Querschneideinrichtung kann derart in die Schneidstation oder die Siegelstation integriert sein, dass sie Antriebseinrichtungen der Schneidstation oder der Siegelstation mitbenutzt. Es wäre alternativ aber auch denkbar, die Querschneideinrichtung als separate Station vorzusehen.

Die Erfindung betrifft auch eine Tiefziehverpackungsmaschine. Die erfindungsgemäße Tiefziehverpackungsmaschine ist zum Durchführen des erfindungsgemäßen Verfahrens ausgelegt, geeignet und konfiguriert.

Die Tiefziehverpackungsmaschine umfasst eine Formstation zum Formen von Verpackungsmulden in einer Unterfolie durch Tiefziehen, eine Einlegestrecke zum Befüllen der Verpackungsmulden mit zu verpackenden Produkten, eine Siegelstation zum Verschließen der befüllten Verpackungsmulden durch siegelndes Verbinden einer Oberfolie mit der Unterfolie, eine Schneidstation zum Ausschneiden der befüllten Verpackungsmulden aus dem Folienverbund und eine Fördereinrichtung zum getakteten Fördern der Unterfolie entlang einer Transportrichtung zu der Formstation, weiter zu der Einlegestrecke, noch weiter zu der Siegelstation und abermals weiter zu der Schneidstation. Zudem ist ein Stanzwerkzeug zum Ausbilden von Zentrierlöchern in der Unterfolie in definierter Relativlage zu den Verpackungsmulden vorgesehen. Es ist des Weiteren zumindest ein Zentrierstift vorhanden, der dazu konfiguriert ist, die Unterfolie durch Eingriff in die Zentrierlöcher auszurichten. Die Fördereinrichtung ist dazu konfiguriert, die Unterfolie dem zumindest einen Zentrierstift bezüglich der Transportrichtung vorgeordnet freizugeben, so dass die Unterfolie für das Ausrichten durch den Zentrierstift Spiel hat.

Im Folgenden wird die Erfindung anhand von Ausführungsbeispielen unter Bezugnahme auf die beigefügten Figuren erläutert. Es zeigt
- Figur 1: eine schematische Seitenansicht auf eine Tiefziehverpackungsmaschine gemäß einer Ausführungsform mit einer Querschneideinrichtung;
- Figur 2: eine schematische Seitenansicht einer Tiefziehverpackungsmaschine gemäß einer anderen Ausführungsform mit einer Folienfreigabe vor der Siegelstation und vor der Schneidstation;
- Figur 3: eine schematische Schnittansicht durch eine fertiggestellte Verpackung gemäß einer Ausführungsform; und
- Figur 4: eine zeitliche Abfolge unterschiedlicher Betriebszustände beim Ausrichten der Unterfolie in der Siegelstation oder der Schneidstation gemäß einer Ausführungsform in schematischer Schnittansicht durch die Siegelstation oder die Schneidstation.

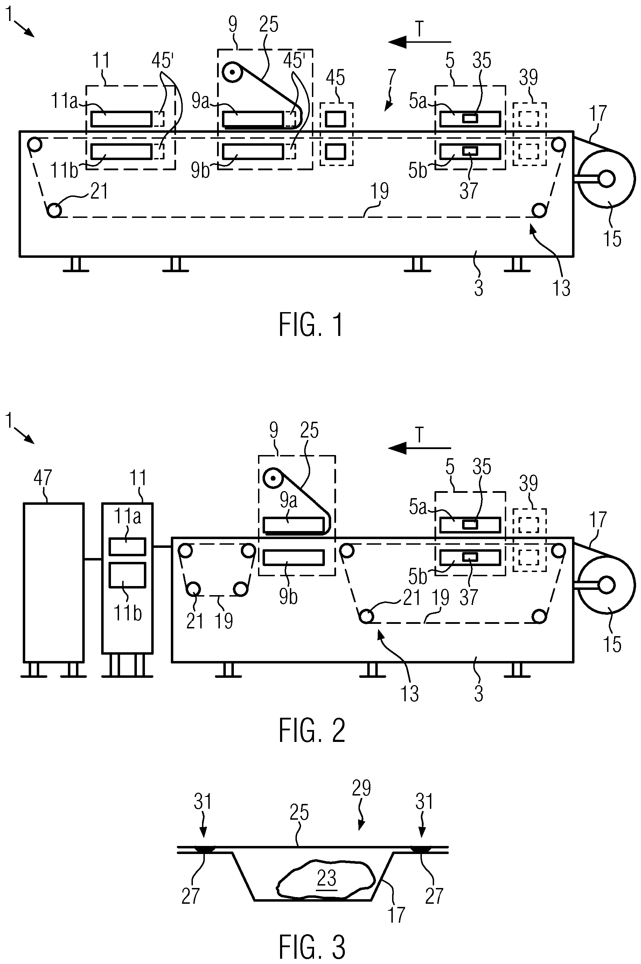

Fig. 1 zeigt in schematischer Seitenansicht eine Tiefziehverpackungsmaschine 1 gemäß einer Ausführungsform. Die Tiefziehverpackungsmaschine 1 umfasst ein Maschinengestell 3, an welchem entlang einer Transportrichtung T hintereinander eine Formstation 5, eine Einlegestrecke 7, eine Siegelstation 9 und eine Schneidstation 11 ortsfest angeordnet sind. Es ist eine Fördereinrichtung 13 zum Fördern einer von einer Vorratsrolle 15 abgezogenen Unterfolie 17 entlang der Transportrichtung T zu der Formstation 5, der Einlegestrecke 7, der Siegelstation 9 und der Schneidstation 11 vorgesehen. Die Fördereinrichtung 13 umfasst bezüglich der

Transportrichtung T auf beiden lateralen Seiten des Maschinengestells 3 umlaufende Klammerketten 19 mit Klammerelementen zum beidseitigen Halten der Unterfolie 17. Die Fördereinrichtung 13 weist zudem eine Antriebseinrichtung 21 zum Antreiben der Klammerketten 19 auf. Die Klammerketten 19 werden derart angetrieben, dass die Unterfolie 17 getaktet entlang der Transportrichtung T gefördert sind, wobei die Arbeitstakte der Formstation 5, der Siegelstation 9 und der Schneidstation 11 aufeinander abgestimmt sind.

Die Formstation 5 ist dazu ausgelegt, durch Tiefziehen Verpackungsmulden in der Unterfolie 17 zu formen. Hierzu umfasst die Formstation 5 ein Formwerkzeugoberteil 5a und ein relativ dazu bewegbares Formwerkzeugunterteil 5b.

In der der Formstation 5 nachfolgenden Einlegestrecke 7 werden zu verpackende Produkte 23 manuell oder automatisch in die Verpackungsmulden eingelegt. In der Siegelstation 9 werden die befüllten Verpackungsmulden durch siegelndes Verbinden einer Oberfolie 25 mit der Unterfolie 17 verschlossen. Hierzu umfasst die Siegelstation 9 ein Siegelwerkzeugoberteil 9a und ein relativ dazu bewegliches Siegelwerkzeugunterteil 9b. In der dargestellten Ausführungsform bewegt sich das Siegelwerkzeugunterteil 9b beim Siegeln nach oben auf das Siegelwerkzeugoberteil 9a zu und kommt mit diesem in Eingriff, so dass die zwischen dem Siegelwerkzeugunterteil 9b und dem Siegelwerkzeugoberteil 9a vorliegende Unterfolie 17 und Oberfolie 25 entlang einer Siegelnaht 27 (siehe Fig. 3) aneinander gesiegelt werden. Prinzipiell wäre es auch denkbar, dass sich das Siegelwerkzeugoberteil 9a nach unten auf das Siegelwerkzeugunterteil 9b absenkt, oder sich sowohl das Siegelwerkzeugoberteil 9a als auch das Siegelwerkzeugunterteil 9b bewegt.

Nach dem Siegeln werden die befüllten Verpackungsmulden in der Schneidstation 11 aus dem Folienverbund ausgeschnitten. Dies erfolgt vorzugsweise durch Ausstanzen. In der gezeigten Ausführungsform umfasst die Schneidstation 11 ein Schneidwerkzeugoberteil 11a und ein Schneidwerkzeugunterteil 11b, welches sich zum Ausstanzen der Verpackung 29 nach oben auf das Schneidwerkzeugoberteil 11a zu bewegt. Es wäre aber auch denkbar, dass sich das Schneidwerkzeugoberteil 11a zum Ausstanzen der Verpackungen 29 nach unten auf das Schneidwerkzeugunterteil 11b absenkt, oder sich sowohl das Schneidwerkzeugoberteil 11a als auch das Schneidwerkzeugunterteil 11b bewegen. Nach dem Ausschneiden der befüllten Verpackungsmulden aus dem Folienverbund können die fertigen Verpackungen 29 manuell oder automatisch entnommen werden.

Fig. 3 zeigt eine schematische Schnittansicht durch eine beispielhafte Verpackung 29. Diese umfasst einen muldenartigen Unterteil, der aus der Unterfolie 17 gebildet ist, und einen diesen verschließenden Oberteil, welcher aus der Oberfolie 25 gebildet ist. Der Unterteil und der Oberteil sind an einer umlaufenden Siegelnaht 27 miteinander versiegelt. In der gezeigten Variante umfasst die Verpackung 29 einen umlaufenden Flanschbereich 31, der die Siegelnaht 27 umfasst.

Um die Positionierungsgenauigkeit der Unterfolie 17 für bestimmte Verarbeitungsschritte zu verbessern, werden erfindungsgemäß in der Unterfolie 17 Zentrierlöcher 33 ausgebildet. In der dargestellten Ausführungsform werden die Zentrierlöcher 33 beim Formen der Verpackungsmulden in der Formstation 5 gleich mit ausgebildet. Hierzu ist ein Stanzwerkzeug mit einem in dem Formwerkzeugoberteil 5a integrierten Stanzwerkzeugoberteil 35 und einem in dem Formwerkzeugunterteil 5b integrierten Stanzwerkzeugunterteil 37 vorgesehen. Dadurch, dass das Stanzwerkzeugoberteil 35 und das Stanzwerkzeugunterteil 37 in dem Formwerkzeugoberteil 5a bzw. dem Formwerkzeugunterteil 5b integriert sind, ist kein separater Antrieb für das Stanzwerkzeug notwendig. Die Zentrierlöcher 33 werden so zudem in einer besonders gut definierten räumlichen Relation zu den Verpackungsmulden ausgebildet, so dass beim Zentrierten mittels der Zentrierlöcher 33 später die Position der Verpackungsmulden besonders gut ausgerichtet werden kann.

Wir in Fig. 1 gestrichelt dargestellt, wäre es aber auch denkbar, das Stanzwerkzeug nicht in die Formstation 5 zu integrieren, sondern eine separate Stanzstation 39 vorzusehen. Diese kann, wie dargestellt, der Formstation 5 vorgeordnet sein, oder aber auch bezüglich der Transportrichtung T hinter der Formstation 5 angeordnet sein.

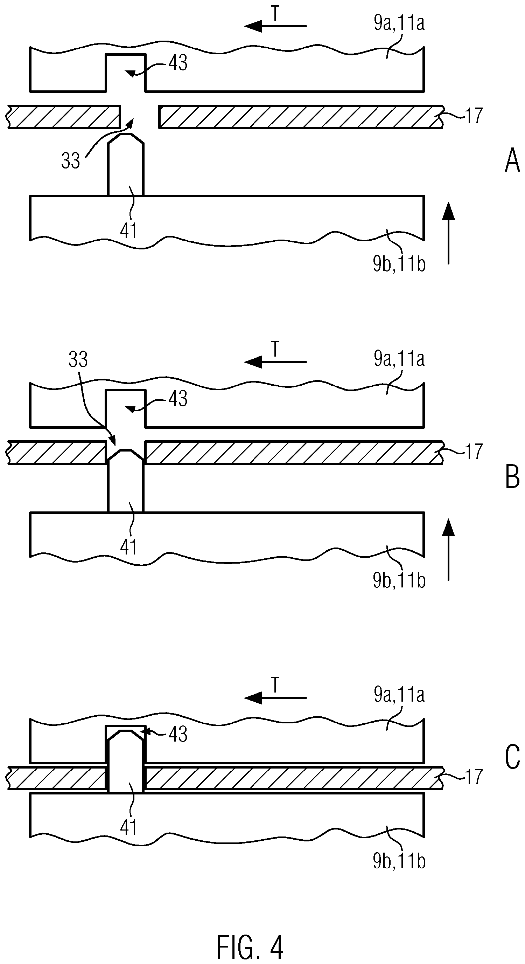

In der Siegelstation 9 und/oder in der Schneidstation 11 ist zumindest ein Zentrierstift 41 vorgesehen, um in ein entsprechendes Zentrierloch 33 in der Unterfolie 17 einzugreifen und damit die Unterfolie 17 geeignet auszurichten. Das Ausrichten der Unterfolie 17 durch den Zentrierstift 41 ist schematisch in Fig. 4 dargestellt, welche in den Teilen A, B und C zeitlich nacheinander vorliegende Betriebszustände darstellt. Der in Fig. 4 dargestellte Ablauf kann sich sowohl auf die Siegelstation 9 als auch auf die Schneidstation 11 beziehen. In der dargestellten Ausführungsform ist der Zentrierstift 41 an einem entsprechenden Werkzeugunterteil (Siegelwerkzeugunterteil 9b oder Schneidwerkzeugunterteil 11b) vorgesehen und erstreckt sich in Richtung auf das entsprechende Werkzeugoberteil (Siegelwerkzeugoberteil 9a oder Schneidwerkzeugoberteil 11a) nach oben. Dem Zentrierstift 41 gegenüberliegend ist in dem entsprechenden Werkzeugoberteil 9a, 11a eine Aufnahmevertiefung 43 für den Zentrierstift 41 vorgesehen. Der Übersichtlichkeit halber ist in Fig. 4 nur die Unterfolie 17 dargestellt, während die zwischen der Unterfolie 17 und dem Werkzeugoberteil 9a, 11a liegende Oberfolie 25 nicht gezeigt ist.

In der in Teil A von Fig. 4 gezeigten Situation liegt die Unterfolie 17 vor Beginn des Siegelvorgangs bzw. des Schneidvorgangs gegenüber einer Solllage entlang der Transportrichtung T verschoben vor, beispielsweise aufgrund einer Vorschubtoleranz der Fördereinrichtung 13. Aus der in Teil A von Fig. 4 dargestellten geöffneten Betriebssituation der Siegelstation 9 bzw. der Schneidstation 11 heraus wird das Werkzeugunterteil 9b, 11b entlang einer vertikalen Richtung nach oben auf das Werkzeugoberteil 9a, 11a zu angehoben. Beim Anheben kommt, wie in Teil B von Fig. 4 gezeigt, der Zentrierstift 41 in Eingriff mit einem entsprechenden Zentrierloch 33 der Unterfolie 17. Durch geeignete Wahl des Durchmessers der Zentrierlöcher 33 je nach Vorschubtoleranz der verwendeten Fördereinrichtung 13 kann erreicht werden, dass der Zentrierstift 41 in der Ausgangslage keine so große Verschiebung aufweist, dass es gar nicht zum Eingriff zwischen dem Zentrierstift 41 und dem Zentrierloch 33 kommt. Eine gewisse Grundgenauigkeit der Fördereinrichtung 13 ist also vorteilhaft, praktisch aber auch durchaus realisierbar.

Durch den Eingriff des Zentrierstifts 41 mit dem Zentrierloch 33 wird die Unterfolie 17 geeignet ausgerichtet. In der dargestellten Situation wird die Unterfolie 17 durch Eingriff mit dem Zentrierstift 41 weiter entlang der Transportrichtung T geschoben. Es wäre aber auch denkbar, dass die Unterfolie 17 durch Eingriff mit dem Zentrierstift 41 entgegen der Transportrichtung T und/oder lateral zur Transportrichtung T verschoben wird. Um das Ausrichten der Unterfolie 17 zu erleichtern, weist der Zentrierstift 41 vorzugsweise eine sich in Richtung auf sein freies Ende hin verjüngende Form auf. Nach dem Ausrichten der Unterfolie 17 wird das Werkzeugunterteil 9b, 11b weiter nach oben verfahren (Teil C von Fig. 4), um den Siegelvorgang bzw. den Schneidvorgang durchzuführen. Hierbei taucht der Zentrierstift 41 in die Aufnahmevertiefung 43 des Werkzeugoberteils 9a, 11a ein und behindert damit den Siegelvorgang bzw. den Schneidvorgang nicht.

In der dargestellten Variante ist der Zentrierstift 41 an dem Werkzeugunterteil 9b, 11b vorgesehen. Es wäre aber auch denkbar, dass der Zentrierstift 41 an dem Werkzeugoberteil 9a, 11a vorgesehen ist und die entsprechende Aufnahmevertiefung 43 für den Zentrierstift 41 an dem Werkzeugunterteil 9b, 11b vorgesehen ist.

Vorzugsweise weisen die Zentrierlöcher 33 einen runden Öffnungsquerschnitt auf. Dies ist aber nicht zwingend erforderlich. Es wären beispielsweise auch rechteckige oder anders geformte Öffnungsquerschnitte denkbar. Auch für den Zentrierstift 41 sind runde, rechteckige oder andere Querschnitte denkbar. Vorzugsweise korrespondiert die Form des Querschnitts des Zentrierstift 41 zu der Form des Öffnungsquerschnittes der Zentrierlöcher 33.

Wie ausgeführt, ist es bevorzugt, wenn das Zentrieren mittels eines Zentrierstifts 41 in der Siegelstation 9 und/oder in der Schneidstation 11 erfolgt. Prinzipiell wäre es aber auch denkbar, die Unterfolie 17 an anderer Stelle mittels zusätzlicher oder alternativer Zentrierstifte 41 zu zentrieren. Es wäre sogar denkbar, eine eigene Zentrierstation vorzusehen, welche beispielsweise der Siegelstation 9 oder der Schneidstation 11 vorgeordnet sein könnte.

In der in Fig. 1 gezeigten Ausführungsform ist eine Querschneideinrichtung 45 vorgesehen, welche die Unterfolie 17 oder den Folienverbund bezüglich der Transportrichtung T vor dem Zentrierstift 41 quer zur Transportrichtung T komplett durchschneidet. In der dargestellten Ausführungsform ist die Querschneideinrichtung 45 vor der Siegelstation 9 und vor der Schneidstation 11 vorgesehen. Das Durchschneiden der Unterfolie 17 bzw. des Folienverbunds quer zur Transportrichtung T vor Erreichen des Zentrierstifts 41 hat den Vorteil, dass der abgeschnittene Teil der Unterfolie 17 durch den Zentrierstift 41 im Wesentlichen unabhängig vom verbleibenden Teil der Unterfolie 17 frei ausgerichtet werden kann. Somit wird ein Strecken und damit Verdünnen der Unterfolie 17 beim Ausrichten durch den Zentrierstift 41 vermieden.

Wie in Fig. 1 gestrichelt dargestellt, wäre es alternativ auch denkbar, die Querschneideinrichtung in die Siegelstation 9 oder in die Schneidstation 11 zu integrieren (Bezugszeichen 45'). Somit könnte der Querschnitt direkt vor dem Ausrichten der Unterfolie 17 in der Siegelstation 9 oder der Schneidstation 11 erfolgen.

Fig. 2 zeigt eine alternative Ausführungsform einer Tiefziehverpackungsmaschine 1. Wie in der Ausführungsform nach Fig. 1 werden Zentrierlöcher 33 in der Unterfolie 17 ausgebildet, welche dann in der Siegelstation 9 und/oder in der Schneidstation 11 zum Ausrichten der Unterfolie 17 mittels zumindest eines Zentrierstifts 41 verwendet werden. Die grundsätzliche Funktionsweise und auch die Beschreibung einzelner Elemente lässt sich von der Ausführungsform gemäß Fig. 1 auf die Ausführungsform gemäß Fig. 2 übertragen. Um Wiederholungen zu vermeiden, werden mit Bezug auf Fig. 2 nur Merkmale beschrieben, die sich von der in Fig. 1 gezeigten Ausführungsform unterscheiden.

Gemäß der Ausführungsform von Fig. 2 ist keine Querschneideinrichtung vorgesehen. Stattdessen gibt die Fördereinrichtung 13 die Unterfolie 17 vor Erreichen der Siegelstation 9 frei und nimmt die Unterfolie 17 der Siegelstation 9 bezüglich der Transportrichtung T nachgeordnet wieder auf, um die Unterfolie 17 weiter zu fördern. In der dargestellten Ausführungsform ist die Fördereinrichtung 13 hierzu in einen der Siegelstation 9 bezüglich der Transportrichtung T vorgeordneten ersten Teil und einen der Siegelstation 9 bezüglich der Transportrichtung T nachgeordneten zweiten Teil unterteilt, wobei der erste und der zweite Teil jeweils eine eigene Antriebseinrichtung 21 aufweisen. Dadurch, dass die Unterfolie 17 im Bereich der Siegelstation 9 nicht von den Klammerketten 19 der Fördereinrichtung 13 gehalten wird, besteht ein gewisses Spiel für die Unterfolie 17, so dass die Unterfolie 17 durch Zusammenwirken des in der Siegelstation 9 vorgesehenen Zentrierstifts 41 mit einem korrespondierenden Zentrierloch 31 in der Unterfolie 17 leichter ausgerichtet werden kann.

Die Schneidstation 11 ist in der Ausführungsform von Fig. 2 als separate Schneidstation 11 ausgebildet, welche getrennt von dem Maschinenrahmen 3 vorliegt. Vor Erreichen der Schneidstation 11 gibt die Fördereinrichtung 13 die Unterfolie 17 wiederum frei, so dass die Unterfolie 17 auch im Bereich der Schneidstation 11 ein gewisses Spiel hat, um mittels eines in der Schneidstation 11 vorgesehenen Zentrierstifts 41 ausgerichtet werden zu können. Der Schneidstation 11 nachgeordnet ist eine Aufrolleinrichtung 47 für das Restfoliengitter vorgesehen, welche ebenfalls getrennt von dem Maschinenrahmen 3 vorliegt.

Wie erwähnt, ist es nicht zwingend erforderlich, dass sowohl in der Siegelstation 9 als auch in der Schneidstation 11 ein Zentrieren der Unterfolie 17 durch einen Zentrierstift 41 erfolgt. Für viele Anwendungen ist es vollkommen ausreichend, wenn nur entweder in der Siegelstation 9 oder in der Schneidstation 11 eine Zentrierung mittels eines Zentrierstifts 41 erfolgt. Auch wäre es denkbar, dass ausschließlich außerhalb der Siegelstation 9 und der Schneidstation 11 eine Zentrierung der Unterfolie 17 durch einen Zentrierstift 41 erfolgt.

Es wurden unterschiedliche Ansätze beschrieben, um der Unterfolie 17 Spiel zu verschaffen, damit diese einfacher von dem Zentrierstift 41 ausgerichtet werden kann. In diesem Zusammenhang wurden insbesondere die Querschneideinrichtung 45, 45' aus Fig. 1 und das Freigeben der Unterfolie 17 durch die Fördereinrichtung 13 aus Fig. 2 diskutiert. Das Vorsehen dieser Maßnahmen ist aber nicht in jedem Fall zwingend erforderlich. Bei einigen Anwendungen kann die Unterfolie 17 auch mittels des Zentrierstifts 41 ausgerichtet werden, ohne dass besondere Maßnahmen zum Verschaffen zusätzlichen Spiels für die Unterfolie 17 getroffen werden. Beispielsweise könnte die Unterfolie 17 beim Ausrichten einfach etwas gedehnt werden. Es wäre auch denkbar, dass die Unterfolie 17 ohnehin mit ausreichend Spiel transportiert wird.

## Patentansprüche

1. Verfahren zum Verpacken von Produkten (23), umfassend:
getaktetes Fördern einer Unterfolie (17) entlang einer Transportrichtung (T) mittels einer Fördereinrichtung (13) zu einer Formstation (5), weiter zu einer Einlegestrecke (7), noch weiter zu einer Siegelstation (9) und abermals weiter zu einer Schneidstation (11);
Formen von Verpackungsmulden in der Unterfolie (17) durch Tiefziehen in der Formstation (5);
Ausbilden von Zentrierlöchern (33) in der Unterfolie (17) in definierter Relativlage zu den Verpackungsmulden;
Befüllen der Verpackungsmulden mit Produkten (23) in der Einlegestrecke (7);
Verschließen der befüllten Verpackungsmulden durch siegelndes Verbinden einer Oberfolie (25) mit der Unterfolie (17) in der Siegelstation (11);
Ausschneiden der befüllten Verpackungsmulden aus dem Folienverbund in der Schneidstation (11); und
Ausrichten der Unterfolie (17) durch Eingriff zumindest eines Zentrierstifts (41) in die Zentrierlöcher (33),
**dadurch gekennzeichnet, dass**
die Unterfolie (17) dem zumindest einen Zentrierstift (41) bezüglich der Transportrichtung (T) vorgeordnet von der Fördereinrichtung (13) freigegeben wird, so dass die Unterfolie (17) für das Ausrichten durch den Zentrierstift (41) Spiel hat.

2. Verfahren nach Anspruch 1, wobei der zumindest eine Zentrierstift (41) zumindest einen in der Schneidstation (11) vorgesehenen Zentrierstift (41) umfasst.

3. Verfahren nach Anspruch 2, wobei zum Ausschneiden der befüllten Verpackungsmulden ein Schneidwerkzeugoberteil (11a) und ein Schneidwerkzeugunterteil (11b) der Schneidstation (11) eine Relativbewegung aufeinander zu ausführen, und wobei im Zuge dieser Relativbewegung der Eingriff des zumindest einen Zentrierstifts (41) in ein Zentrierloch (33) erfolgt, so dass die Unterfolie (17) vor dem eigentlichen Ausschneiden in der Schneidstation (11) ausgerichtet wird.

4. Verfahren nach einem der vorangehenden Ansprüche, wobei der zumindest eine Zentrierstift (41) zumindest einen in der Siegelstation (9) vorgesehenen Zentrierstift (41) umfasst.

5. Verfahren nach Anspruch 4, wobei für das siegelnde Verbinden der Oberfolie (25) mit der Unterfolie (17) ein Siegelwerkzeugoberteil (9a) und ein Siegelwerkzeugunterteil (9b) der Siegelstation (9) eine Relativbewegung aufeinander zu ausführen, und wobei im Zuge dieser Relativbewegung der Eingriff des zumindest einen Zentrierstifts (41) in ein Zentrierloch (33) erfolgt, so dass die Unterfolie (17) vor dem eigentlichen Siegeln in der Siegelstation (9) ausgerichtet wird.

6. Verfahren nach einem der vorangehenden Ansprüche, wobei die Zentrierlöcher (33) beim Formen der Verpackungsmulden in der Formstation (5) ausgebildet werden, insbesondere durch Ausstanzen.

7. Verfahren nach einem der vorangehenden Ansprüche, wobei die Unterfolie (17) zum Fördern der Unterfolie (17) bezüglich der Transportrichtung (T) auf beiden lateralen Seiten von Klammerelementen von Kammerketten (19) der Fördereinrichtung (13) gehalten wird, und die Klammerelemente die Unterfolie (17) bezüglich der Transportrichtung (T) vor dem zumindest einen Zentrierstift (41) freigeben.

8. Verfahren nach einem der vorangehenden Ansprüche, wobei die Unterfolie (17) oder der Folienverbund bezüglich der Transportrichtung (T) vor dem zumindest einen Zentrierstift (41) mittels einer Querschneideinrichtung (45, 45') quer zur Transportrichtung (T) durchgeschnitten wird.

9. Verfahren nach Anspruch 8, wobei die Querschneideinrichtung (45, 45') in die Schneidstation (11) oder die Siegelstation (9) integriert ist oder als separate Station vorgesehen ist.

10. Tiefziehverpackungsmaschine (1) zum Durchführen des Verfahrens nach einem der vorangehenden Ansprüche, umfassend:
eine Formstation (5) zum Formen von Verpackungsmulden in einer Unterfolie (17) durch Tiefziehen;
ein Stanzwerkzeug zum Ausbilden von Zentrierlöchern (33) in der Unterfolie (17) in definierter Relativlage zu den Verpackungsmulden;
eine Einlegestrecke (7) zum Befüllen der Verpackungsmulden mit zu verpackenden Produkten (23);
eine Siegelstation (9) zum Verschließen der befüllten Verpackungsmulden durch siegelndes Verbinden einer Oberfolie (25) mit der Unterfolie (17);
eine Schneidstation (11) zum Ausschneiden der befüllten Verpackungsmulden aus dem Folienverbund;
eine Fördereinrichtung (13) zum getakteten Fördern der Unterfolie (17) entlang einer Transportrichtung (T) zu der Formstation (5), weiter zu der Einlegestrecke (7), noch weiter zu der Siegelstation (9) und abermals weiter zu der Schneidstation (11); und
zumindest einen Zentrierstift (41), der dazu konfiguriert ist, die Unterfolie (17) durch Eingriff in die Zentrierlöcher (33) auszurichten,
**dadurch gekennzeichnet, dass**
die Fördereinrichtung (13) dazu konfiguriert ist, die Unterfolie (17) dem zumindest einen Zentrierstift (41) bezüglich der Transportrichtung (T) vorgeordnet freizugeben, so dass die Unterfolie (17) für das Ausrichten durch den Zentrierstift (41) Spiel hat.

## Claims

1. Method for packaging products (23), comprising:
conveying a base film (17) in a clocked manner using a conveying device (13) along a direction of transport (T) to a forming station (5), onward to a loading path (7), further onward to a sealing station (9) and still further onward to a cutting station (11);
forming packaging troughs into the base film (17) in the forming station (5) by thermoforming;
forming centering holes (33) into the base film (17) in a defined relative position to the packaging troughs;
filling the packaging troughs in the loading path (7) with products (23);
sealing the filled packaging troughs in the sealing station (9) by sealingly connecting a top film (25) to the base film (17);
cutting out the filled packaging troughs from the film composite in the cutting station (11); and
aligning the base film (17) by engagement of at least one centering pin (41) into the centering holes (33),
**characterized in that**
the base film (17) is released by the conveying device (13) upstream of the at least one centering pin (41) in terms the direction of transport (T) so that the base film (17) has play for alignment by the centering pin (41).

2. Method according to claim 1, wherein the at least one centering pin (41) comprises at least one centering pin (41) provided in the cutting station (11).

3. Method according to claim 2, wherein a cutting tool upper part (11a) and a cutting tool lower part (11b) of the cutting station (11) perform a relative motion towards each other for cutting out the filled packaging troughs, wherein in the course of this relative motion the engagement of the at least one centering pin (41) into a centering hole (33) is effected such that the base film (17) is aligned prior to the actual cutting process in the cutting station (11).

4. Method according to any one of the preceding claims, wherein the at least one centering pin (41) comprises at least one centering pin (41) provided in the sealing station (9).

5. Method according to claim 4, wherein a sealing tool upper part (9a) and a sealing tool lower part (9a) of the sealing station (9) perform a relative motion towards each other for sealingly connecting the top film (25) to the base film (17), wherein in the course of this relative motion the engagement of the at least one centering pin (41) into a centering hole (33) is effected such that the base film (17) is aligned prior to the actual sealing process in the sealing station (9).

6. Method according to any one of the preceding claims, wherein the centering holes (33) are formed when the packaging troughs are formed in the forming station (5), in particular by punching.

7. Method according to any one of the preceding claims, wherein the base film (17) is held on both lateral sides in terms of the direction of transport (T) by clamping elements of clamping chains (19) of the conveying device (13) for conveying the base film (17), and the clamping elements release the base film (17) upstream of the at least one centering pin (41) in terms of the direction of transport (T).

8. Method according to any one of the preceding claims, wherein the base film (17) or the film composite is severed transversely to the direction of transport (T) upstream of the at least one centering pin (41) in terms of the direction of transport (T) using a transverse cutting device (45, 45').

9. Method according to claim 8, wherein the transverse cutting device (45, 45') is integrated into the cutting station (11) or the sealing station (9) or is provided as a separate station.

10. Thermoforming packaging machine (1) for performing the method according to any one of the preceding claims, comprising:
a forming station (5) for forming packaging troughs into a base film (17) by thermoforming;
a punching tool for forming centering holes (33) into the base film (17) in a defined relative position to the packaging troughs;
a loading path (7) for filling the packaging troughs with products (23) to be packaged;
a sealing station (9) for sealing the filled packaging troughs by sealingly connecting a top film (25) to a base film (17);
a cutting station (11) for cutting out the filled packaging troughs from the film composite;
a conveying device (13) for conveying of the base film (17) in a clocked manner along a direction of transport (T) to the forming station (5), onward to the loading path (7), further onward to the sealing station (9) and again onward to the cutting station (11); and
at least one centering pin (41) configured to align the base film (17) by the engagement into the centering holes (33),
**characterized in that**
the conveying device (13) is configured to release the base film (17) upstream of the at least one centering pin (41) in terms the direction of transport (T) so that the base film (17) has play for alignment by the centering pin (41).

## Revendications

1. Procédé d'emballage de produits (23), comprenant :
l'alimentation cadencée d'un film inférieur (17) dans une direction de transport (T) au moyen d'un dispositif d'alimentation (13) à une station de formage (5), ensuite à une section de garnissage (7), ensuite à une station de scellage (9), et ensuite à une station de découpe (11) ;
le formage de barquettes d'emballage dans le film inférieur (17) par emboutissage dans la station de formage (5) ;
la réalisation de trous de centrage (33) dans le film inférieur (17) à des positions relatives définies par rapport aux barquettes d'emballage ;
le remplissage des barquettes d'emballage avec des produits (23) dans la section de garnissage (7) ;
la fermeture des barquettes d'emballage remplies par une connexion par scellage d'un film supérieur (25) avec le film inférieur (17) dans la station de scellement (11) ;
la découpe des barquettes d'emballage remplies hors de l'ensemble de film dans la station de découpe (11) ; et
l'alignement du film inférieur (17) par l'engagement d'au moins d'une broche de centrage (41) dans les trous de centrage (33),
**caractérisé en ce que** le film inférieur (17) est libéré de ladite au moins une broche de centrage (41) en amont du dispositif d'alimentation (13) en direction de transport (T), de telle sorte que le film inférieur (17) présente un jeu pour l'alignement par la broche de centrage (41) .

2. Procédé selon la revendication 1, dans lequel ladite au moins une broche de centrage (41) comprend au moins une broche de centrage (41) pourvue dans la station de découpe (11) .

3. Procédé selon la revendication 2 dans lequel, pour la découpe des barquettes d'emballage remplies, une partie supérieure d'outil de découpe (11a) et une partie inférieure d'outil de découpe (11b) de la station de découpe (11) exécutent un déplacement relatif l'une par rapport à l'autre, et dans lequel, suite à ce déplacement relatif, l'engagement de ladite au moins une broche de centrage (41) dans un trou de centrage (33) se produit de telle sorte que le film inférieur (17) est aligné avant la découpe effective dans la station de découpe (11).

4. Procédé selon l'une des revendications précédentes, dans lequel ladite au moins une broche de centrage (41) comprend au moins une broche de centrage (41) pourvue dans la station de scellage (9).

5. Procédé selon la revendication 4, dans lequel une partie supérieure d'outil de scellage (9a) et une partie inférieure d'outil de scellage (9b) de la station de scellage (9) exécutent un déplacement relatif l'une par rapport à l'autre pour la connexion scellée du film supérieur (25) avec le film inférieur (17), et dans lequel, suite à ce déplacement relatif, l'engagement de ladite au moins une broche de centrage (41) se produit dans un trou de centrage (33), de telle sorte que le film inférieur (17) est aligné avant le scellage effectif dans la station de scellage (9).

6. Procédé selon l'une des revendications précédentes, dans lequel les trous de centrage (33) sont réalisés lors du formage des barquettes d'emballage dans la station de formage (5), en particulier par poinçonnage.

7. Procédé selon l'une des revendications précédentes, dans lequel le film inférieur (17) est maintenu sur les deux côtés latéraux par des éléments de serrage de chaînes de serrage (19) du dispositif d'alimentation (13) pour l'alimentation du film inférieur (17) en direction de transport (T), et les éléments de serrage libèrent le film inférieur (17) avant ladite au moins une broche de centrage (41) en direction de transport (T).

8. Procédé selon l'une des revendications précédentes, dans lequel le film inférieur (17) ou l'ensemble de film est découpé avant ladite au moins une broche de centrage (41) en direction de transport (T) au moyen d'un dispositif de cisaille (45, 45') transversalement par rapport à la direction de transport (T).

9. Procédé selon la revendication 8, dans lequel le dispositif de cisaille (45, 45') est intégré dans la station de découpe (11) ou dans la station de scellage (9), ou est pourvu comme une station séparée.

10. Machine d'emballage à emboutissage (1) pour mettre en œuvre le procédé selon l'une des revendications précédentes, comprenant :
une station de formage (5) pour former des barquettes d'emballage dans un film inférieur (17) par emboutissage ;
un outil de poinçonnage pour constituer des trous de centrage (33) dans le film inférieur (17) à des positions relatives définies par rapport aux barquettes d'emballage ;
une section de garnissage (7) pour le remplissage des barquettes d'emballage avec des produits à emballer (23) ;
une station de scellage (9) pour refermer les barquettes d'emballage remplies par une liaison scellée d'un film supérieur (25) avec le film inférieur (17) ;
une station de découpe (11) pour la découpe des barquettes d'emballage remplies hors de l'ensemble de film ;
un dispositif d'alimentation (13) pour l'alimentation cadencée du film inférieur (17) selon une direction de transport (T) à la station de formage (5), ensuite à la section de garnissage (7), ensuite à la station de scellage (9), et ensuite à la station de découpe (11) ; et
au moins une broche de centrage (41) configurée pour aligner le film inférieur (17) par engagement dans les trous de centrage (33),
**caractérisée en ce que** le dispositif d'alimentation (13) est configuré de manière à libérer le film inférieur (17) de ladite au moins une broche de centrage (41) en amont en direction de transport (T), de telle sorte que le film inférieur (17) présente un jeu pour l'alignement par la broche de centrage (41).
